(19) **Europäisches Patentamt / European Patent Office / Office européen des brevets**

(11) **EP 3 739 522 A1**

(12) # EUROPEAN PATENT APPLICATION

(43) Date of publication:
**18.11.2020 Bulletin 2020/47**

(51) Int Cl.:
**G06N 3/04** *(2006.01)*    **G06N 3/08** *(2006.01)*

(21) Application number: **19175068.6**

(22) Date of filing: **17.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **GOSHEN, Liran**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **DEEP VIRTUAL CONTRAST**

(57)    A training system for a machine learning model for image enhancement, and related methods. The system comprises an input interface (IN) for receiving at least one training input image (I) and at least two machine learning models (V, C) having parameters that define a configuration. The at least two machine learning models comprise a target machine learning model (V) to transform the training input image into an intermediate representation (CR) and to produce therefrom a training output image (I') and a first auxiliary machine learning model (C) configured to transform the intermediate representation into an estimate for the training input image. The system further comprising a model parameter adjuster (PA) configured to adjust the configuration based on i) a residue formed by a deviation between the estimate and the training input image and ii) a deviation between the training output image (I') and a training target image ($\tilde{I}$). The auxiliary machine learning model forms a regularization framework to foster quick training and allows achieving appreciable image contrast boost.

FIG. 2

**Description**

FIELD OF THE INVENTION

The invention relates to systems for training a machine learning model for image processing, to a system for image enhancement, to methods for training a machine learning model, to an imaging arrangement, to a computer program element, and to a computer readable medium.

BACKGROUND OF THE INVENTION

Contrast media is used in an increasing number of diagnostic and interventional clinical procedures. Contrast media ("CM", or "contrast agent") is administered to patients intravascularly to improve tissue visualization during diagnostic imaging studies, for example in CT (Computed Tomography), angiography, fluoroscopy, MRI (Magnetic Resonance Imaging) and many other imaging modalities or during certain therapeutic procedures such as PTCA (percutaneous transluminal coronary angioplasty), and others.

In addition, contrast media may be administered orally and/or via other natural orifices depending on the indications for the imaging procedure. Tens of millions of radiologic examinations that use iodinated contrast media are performed each year. For example, it has been estimated that 44% of the total CT studies in the US during 2010 used iodinated CM, 35% in India, 74% in Japan and 10-15% in China.

In contrast-enhanced CT the use of non-ionic iodine as a contrast medium can cause acute allergic-like reactions. These reactions range from mild symptoms such as urticaria and itching to more severe reactions such as cardiopulmonary arrest.

One of the most serious side effects of iodine-based agents is contrast medium-induced nephropathy. Nash et al. report in "Hospital-acquired renal insufficiency", Am. J. Kidney Dis: Off. J. Natl Kidney Found, vol. 39, pp 930-936, 2002, that the contrast-medium-induced nephropathy is the third most common cause of acute renal failure in hospitalized patients, although not all such cases may be necessary linked to CM administration. In any case, monitoring of the serum creatinine before CM administration is usually done before acquisition of contrast-enhanced CT data.

While being aware of these health risks, contrast-enhanced CT is one of the most valuable day-to-day procedures in modern diagnostic imaging. Before the data acquisition, the non-ionic iodine contrast medium is administered following a manual or a bolus tracker start of the contrast-enhanced CT data acquisition.

The resulting enhanced tomographic slices significantly improve the diagnostic quality compared with unenhanced (native) data. Because in unenhanced CT data the solid organs have similar densities within a range of 40-60 HU, differentiation of abnormalities is difficult. With contrast-enhanced CTs, the density of different tissues can rise above 100 HU. Such an improvement in contrast can be observed, for example, with regard to the detection of tumors and lesions. For other diagnostic indications, like CT angiography or CT perfusion studies, contrast enhancement is necessary.

In addition to the aforementioned clinical benefits of reducing contrast utilization, there is also a significant economic benefit of contrast utilization reduction in terms of cost. The CM cost can be high in certain territories (e.g., Japan $120/100ml vs. $20 in North America). Moreover, non-ionic and low osmolar agents, commonly used today, which are better tolerated by patients regarding idiosyncratic effects, are even more expensive.

As the amount of contrast delivered to a patient is of concern, a set of technological enablers were developed to reduce contrast usage: use of power injectors, high rate chaser saline, faster rotation time, wider coverage area, bolus tracking software and the use of low kVp protocols and spectral/conventional enhancement algorithms. Some of these are however expensive or difficult to use.

SUMMARY OF THE INVENTION

There may therefore be a need for alternative systems and methods to address some of the above mentioned shortcomings. In particular, there may be a need to reduce the amount of contrast media used in imaging.

The object of the present invention is solved by the subject matter of the independent claims where further embodiments are incorporated in the dependent claims. It should be noted that the following described aspect of the invention equally applies to the system for image enhancement, to the methods for training a machine learning model, to the imaging arrangement, to the computer program element, and to the computer readable medium.

According to a first aspect of the invention there is provided a system for training a machine learning model for image processing, comprising:

an input interface or receiving at least one training input image;
at least two machine learning models having parameters that define a configuration, the at least two machine learning models comprising:

a target machine learning model to transform the training input image into an intermediate representation and to produce therefrom a training output image;
a first auxiliary machine learning model configured to transform the intermediate representation into an estimate for the training input image;
the system further comprising a model parameter adjuster configured to adjust the configuration based on i) a residue formed by a deviation between the estimate and the training input image and ii) a deviation between the training output image and a training target image.

In embodiments, the training input image is drawn from a set of (at least one) training images or wherein the system further comprises a second auxiliary machine learning model configured to scramble a training image from the set of training images to produce the training input image. The target image is associated with the training input image or training image.

In embodiments, the model parameter adjuster is further configured to adjust the configuration based on a deviation between a magnitude of the residue and a magnitude of the scrambled training image.

In embodiments, the target image has a higher contrast than the training input image or includes an artifact of lesser severity than the training input image.

In embodiments, the target image was acquired with contrast agent present at a region of interest.

In embodiments, at least one of the target model and the two auxiliary machine learning models is a neural network. In embodiments, the neural network is an at least partly convolutional neural network. However, other machine learning models are not excluded herein. Specifically, in embodiments, at least the target model is an autoencoder network. In embodiments, the first auxiliary machine learning model is autoencoder or at least a part of an autoencoder, in particular a decoder stage matching the encoder stage of the target model.

In embodiments, the training output image has the same size or dimensionality as the training input image, and wherein the intermediate representation has a size or dimensionality different from the training input image.

Alternatively, the training system includes the target model in combination with the second auxiliary model (the first auxiliary model being not necessarily required in all embodiments envisaged herein). Specifically, in another aspect there is provided a system for training a machine learning model for image processing, comprising:

an input interface or receiving at least one training image;
at least two machine learning models having parameters that define a configuration, the at least two machine learning models comprising:

an auxiliary machine learning model to scramble the training image to produce a training input image;
a target machine learning model to transform the training input image into a training output image;
the system further comprising a parameter adjuster configured to adjust the configuration based on i) a residue that is formed by a deviation between the training output image and a training target image and ii) a deviation between a magnitude of the residue and a magnitude of the training input image.

Preferably, the training system is arranged in a deep learning architecture, with one, any two, or, preferably all three of the models having a neural network structure with at least one, better two hidden layer. The deep learning approach is a powerful scalable approach, that enables the proposed training system to capture a large set of complex connections and pattern that are represented by the data in the training data set.

Preferably, the target model is a deep, multi-scale, and, a fully or partially convolutional network that is trained to enhance the input images. The target model preferably includes two main parts: a multi-scale encoder and multi-scale decoder. The overall structure may be implemented as an autoencoder network as mentioned above. The number of scales in the two parts is preferably equal. As mentioned, the target model may be implemented in embodiments as a multi-Scale Fully Convolutional Network. In this network architecture, the training images could be of arbitrary size/dimension, and the network produces a correspondingly-sized output with efficient inference and learning. Optionally, or in addition, the acquisition protocol and reconstruction parameters are also provided as input alongside the images. In this setup, features across layers are "fused" to define a nonlinear multi-scale or local to-global representation that could be optimized end-to-end.

The first and/or second auxiliary models, one of which may be optional (but both are preferred in embodiments), implement a regularization framework for the training of the target model. The regularization fosters certain desirable properties of the target model. This regularization has been observed to result in robust learning, and good performance of the fully trained target model, capable of achieving good image enhancement. An up to around 40% contrast gain has been found in Applicant's experiments. Similar enhancements may be achieved for other image quality metrics, such as artifact reduction. In more detail, and in embodiments, the proposed deep learning system uses a type of generative, multi-scale fully convolutional networks, which utilize a boosted training scheme that includes two new regularizations: code cycle-consistency regularization as implemented by the first auxiliary model, referred to herein as the "code checker", and an adversarial mix structure regularization as implemented by the second auxiliary model, referred to herein as "the scrambler". The code checker and the scrambler may each be implemented as an additional (that is, additional to the actual target model) multi-scale fully convolutional networks. The training system provides automatic generation of enhanced images when deploying the target model (network) once fully trained.

Broadly, the code checker monitors the "code", the intermediate representation produced by the target model. This affords quicker convergence to parametrizations of the target model that deliver good enhancement results. The code checker implements the "Code Cycle-Consistency Regularization". The idea here is to add additional constraints over the code generated by the encoder part of the target model. These additional constraints promote a convergence to more generalized and effective code, which boosts the performance of the whole network. The code checker may be implemented as a decoder.

The scrambler scrambles the training images before processing by the target model. Counterintuitive as this may seem, this measure allows securing better learning at higher robustness, and better generalization, with reduced overfitting in relation to particulars that happen to be represented in the training images. The two auxiliary models, when used in combination with the target model, act synergistically: Overfitting is avoided with quick convergence of optimization towards good target model parameterizations, ready to be deployed. The scrambler implements the "Adversarial Mix Structure Regularization". In this approach, the idea is to deliberately scramble, that is, corrupt, the training images in such a manner so as to achieve more robust, generalized and effective code. The amount or magnitude of the scrambling action is controlled in using an adversarial approach, which enables providing a very high performance network. The scrambler may also be implemented, just like the target model, as an autoencoder, but other networks or ML models are also envisaged.

The training input images may include conventional CT images or images of other modalities such as UV, MRI, PET, SPECT, etc. Optionally, also non-image context data such as acquisition protocol parameters, reconstruction parameters and/or patient data, are provided in training and deployment.

The target image is associated with the training input image to form a pair. The training data set includes a number of such (different) pairs. Preferably both images per pair show the same or similar parts of an anatomy, with the target being an enhanced version of the training input image. For instance, the target image has fewer artifacts or less severe artifacts or is at higher contrast than the training input image in the pair. The higher contrast may be due to contrast agent administration or it may have been achieved through other CNR enhancement techniques, or by spectral or dual imaging techniques, or other.

In another aspect there is provided a system for image enhancement, comprising:

an input interface to receive an input image;
a machine learning component including the target model previously trained by a system as per any one of the previously described aspects or embodiments, the machine learning component to process the input image to produce an output image, the said output image being an enhanced version of the input image.

In embodiments, the enhancement is any one or more of an artifact reduction and a contrast increase.

In another aspect there is provided an imaging arrangement, comprising:

a system for image enhancement as described above;
an imaging apparatus supplying an input image to be processed by the system for image enhancement; and
a display device for displaying the processed image.

The target model, once trained, can be used in the image enhancement processor. A low contrast image can be transformed into an image with higher contrast. Thanks to the proposed training scheme, a smaller amount of contrast agent may be thus sufficient to still obtain images of sufficient, useful contrast, thus saving costs and discomfort for the patient. A significant reduction in CM usage can be achieved with the same clinical/radiological effects as before (when large amounts of CM were used), with no change in conventional CT scanning parameters and no compromise on clinical acceptance of CT studies, e.g., good vascular enhancement and good organ enhancement. The proposed system and methods compensate the contrast volume reduction by enhancement of study images. In addition, the proposed methods and systems may be used as a general purpose image enhancement tool, which is not limited to reduced contrast protocols.

According to another aspect there is provided a computer-implemented method of training a machine learning model, comprising the steps of:

receiving at least one training input image;

applying a target machine learning model to transform the training input image into an intermediate representation and to produce therefrom a training output image;

applying a first auxiliary machine learning model to transform the intermediate representation into an estimate for the training input image;

the target machine learning model and the first auxiliary machine learning model having parameters that define a configuration, the method further comprising:

adjusting the configuration based on i) a residue formed by a deviation between the estimate and the training input image and ii) a deviation between the training output image and a training target image.

In embodiments, the method uses a further machine learning model and comprises the step of applying the further machine learning model to scramble the training image to produce the said training input image. In other words, in embodiments, rather than applying the training image direct to the target model, the training image is first processed (scrambled) by the further machine learning model and it is the so scrambled training image that is then applied as the training input image to the target model.

Method of training a machine learning model, comprising the steps of:

receiving at least one training image;

applying an auxiliary machine learning model to scramble the training image to produce a training input image;

applying a target machine learning model to transform the training input image into a training output image;

the target machine learning model and the auxiliary machine learning model having parameters that define a configuration, the method further comprising:

adjusting the configuration based on i) a residue that is formed by a deviation between the training output image (I') and a training target image and ii) a deviation between a magnitude of the residue and a magnitude of the training input image.

In another aspect there is a provided a computer program element, which, when being executed by at least one processing unit, is adapted to cause the processing unit to perform the method.

In another aspect there is a provided a computer readable medium having stored thereon the program element.

The proposed systems and methods afford a significant contrast media volume reduction, while providing diagnostic image quality. The associated health risks for patients and cost that relate to large amount of contrast agent, can be avoided.

Usually, the preparation of large training data is a challenging, tedious, time-consuming and costly task. The proposed method has the attractive advantage of having the capability to boost the training quality, which enables us to provide high quality results with reduced size training data, thanks to one or both of the proposed regularizations: the code cycle-consistency regularization and the adversarial mix structure regularization.

In general, a "machine learning component or model" is a computerized arrangement that implements a machine learning ("ML") algorithm. The algorithm is configured to perform a task. In an ML algorithm, task performance improves measurably after having provided the arrangement with more and more training data. The performance may be measured by objective tests when feeding the trained model with test data. The performance may be defined by requiring a certain error rate to be achieved for the given test data. See T. M. Mitchell, "Machine Learning", page 2, section 1.1, McGraw-Hill, 1997. The task of main interest herein is the automatic removal of image artifacts or the automatic increase of image contrast, or improvement of other IQ (image quality) metrics.

An encoder-decoder network, such as an "autoencoder", as envisaged herein for the target model V or code checker model C, is a neural network (NN) architecture, in particular a convolutional neural network (CNN), where a size or dimension (measured in nodes for example) of its initial input layer equals the size/dimension of its final output layer. In at least two hidden layers, the encoder and decoder, respectively, the input image is first decreased in spatial size or dimension relative to the input, to achieve a reduced representation, and is then increased again for output. Alternatively, the input image is first increased in spatial size or dimension, to achieve an over-complete representation, and is then decreased again for output. More generally, a machine learning model, in particular constructed according to the *"encoding/decoding principle",* may include at least two hidden layers. One layer is configured to map the initial input image down to a representation of a lower or higher dimension than the initial input image and the at least one other hidden layer is configured to remap the central representation to a second image having the same dimension as the input image. The representation may be referred to herein as the central representation because it emerges as an intermediate output between the said at least two hidden layers.

BRIEF DESCRIPTION OF THE DRAWINGS

Exemplary embodiments of the invention will now be described with reference to the following drawings, which are not to scale, wherein:

Fig. 1 shows a schematic block diagram of an image enhancement system;
Fig. 2 shows a block diagram of a training system based on two or more machine learning models;
Fig. 3 shows a block diagram of a machine learning model according to one embodiment; and
Fig. 4 shows a flowchart of a computer-implemented method for training a machine learning model.

DETAILED DESCRIPTION OF EMBODIMENTS

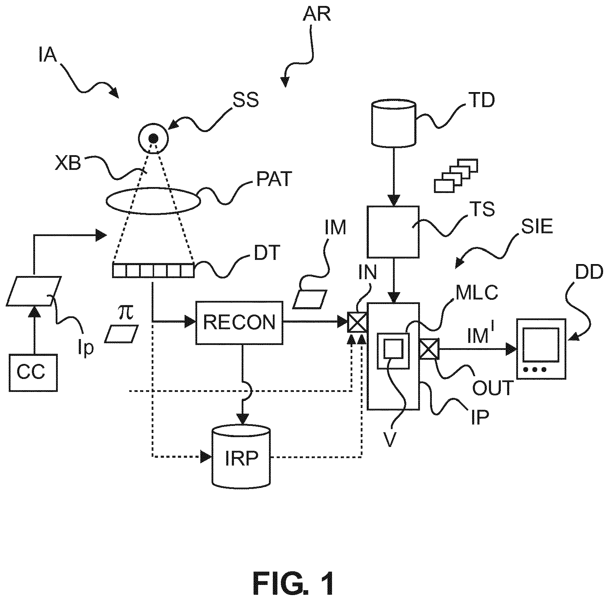

With reference to Figure 1, there is shown a computerized imaging arrangement AR. The arrangement AR comprises, in embodiments, an imaging apparatus IA and a system for image enhancement SIE including an image enhancement processor IP. Very briefly, the image enhancement processor IP is configured to enhance image quality in imagery obtained by the imaging apparatus IA. Image enhancement may include a reduction or removal of image artifacts or an increase in image contrast. Image contrast can be measured and quantified by, for instance, the contrast-to-noise ratio (CNR). A higher CNR is preferred.

The imaging apparatus IA (sometimes referred to herein simply as the "imager") is preferably envisaged herein for medical purposes and is operable to acquire one or more images of a patient PAT. Broadly, the imaging apparatus comprises a signal source SS to generate an interrogating signal XB. The interrogating signal XB interacts with tissue in patient PAT and is thereby modified. The modified signal is then detected by a detection unit DT. The detected signals, such as intensity values, form detector raw data or projection imagery. Projection imagery may be of interest in its own right, but at times the projection imagery is further processed by a reconstruction module RECON to produce reconstructed imagery IM.

The imager IA envisaged herein is configured for structural or functional imaging. A range of imaging modalities is envisaged herein such as transmission imaging and emission imaging or others, such as ultrasound (US) imaging. For instance, in transmission imaging, such as x-ray based imaging, the signal source SS is an x-ray tube and the interrogating signal is an x-ray beam XB generated by the tube SS. In this embodiment, the modified x-ray beam impinges on X-ray sensitive pixels of the detection unit DT. The X-ray sensitive detector DT registers the impinging radiation as a distribution of intensity values. The registered intensity values form projection images $\pi$. The X-ray projection images $\pi$, although sometimes useful in their own right such as in x-ray radiography, may then be transformed into cross-sectional images in CT imaging by the reconstruction module RECON. Specifically, the reconstruction module RECON applies a reconstruction algorithm to the projection imagery, such as filtered back- projection or other algorithms. A cross-sectional image forms a 2D image in 3D space. In CT, a plurality of such cross-sectional images may be reconstructed from different sets of projection images to obtain a 3D image volume. In MRI images, the detection unit is formed from coils, that are capable of picking up radiofrequency signals that represent the projection imagery, from which MRI cross-sectional images may be reconstructed by MRI reconstruction algorithms. The X-ray imagery in CT or radiography represents structural details of the patient's anatomy. In emission imaging, such as PET or SPECT, the signal source SS may reside inside the patient in form of a previously administered radioactive tracer substance. Nuclear events caused by the tracer substance are then registered as projection images at a PET/SPECT detector DT arranged around the patient. A PET/SPECT reconstruction algorithm is then applied to obtain reconstructed PET/SPECT imagery that represents functional details of processes inside the patient, such as metabolic processes.

The imaging apparatus IA is controlled by an operator from an operator console CC. The operator can set a number of imaging parameters *Ip.* Imaging parameters comprises acquisition parameters and/or, if applicable, reconstruction parameters. The acquisition parameters refer to settings of the imaging apparatus that control the imaging operation, such as X-ray tube settings (amperage or voltage) or similar. A reconstruction parameter on the other hand relates to parameters that relate to operation of the reconstruction algorithm. The reconstruction parameters are not necessarily set at the operator console, but may be set, at a later stage, at a work station or other computer In x-ray imaging, acquisition parameters may include any one or more of the following: scan type, body part, XR source (tube) XR settings such as mA, mAs, kVp, rotation time, collimation setting, pitch, etc. "Scan type" can be helical or axial and/or may specify the region of interest (ROI) to be imaged, such as chest, lung, pulmonary embolism, cardiac, etc. "Pitch" is a parameter in multi-slice spiral CT and is defined as the ratio of table increment over detector collimation.

If a reconstruction operation by the reconstruction module RECON is called for, such as in CT or MR or in emission imaging (PET/SPECT), this may require the specification of the reconstruction parameters to adjust the reconstruction algorithm. Suitable reconstruction parameters envisaged in CT reconstruction may include any one or more of the following: reconstruction filter, reconstruction algorithm (e.g., FBP, iDose or IMR), slice thickness, slice increment, image size (in pixels or voxels, *m x n*) and field of view, etc.

The acquisition parameters specify how the imaging apparatus is to operate to acquire image signals which are then converted into image values. The reconstruction parameters describe how the image values are converted from one domain (eg, projection domain) into other image values in a different domain, eg image domain. Both parameters, the imaging parameters and/or the reconstruction parameters, are thus influencing the image values or distribution thereof in the imagery.

Unless specifically stated, in the following, no distinction will be made between reconstructed images or projection images, and we will refer to both simply as input image(s) or "imagery" IM to be processed by the image enhancement processor IP. In other words, the image enhancement processor IP may be configured therein to operate on imagery from the projection domain or may act on imagery reconstructed in imaging domain.

The input imagery produced by the apparatus IA is received at the imaging processor IP at its interface IN', through wired or wireless communication means for example. The imagery IM may be received directly from the imaging apparatus, or may be retrieved from an imaging repository IRP where the imagery is stored after acquisition.

Some imaging protocols require the administration of contrast agent to the patient to boost image contrast, a higher CNR, in respect of organs or tissue that do not have, in and by themselves, sufficient radio-opacity. Contrast agents may be used in CT or other X-ray based imaging modalities but may also be used in MRI for example.

Also, in most imaging modalities, for technical, physical or other reasons, the projection imagery, or the reconstructed imagery, may be inflicted by image artifacts. Image artifacts are image structures that do not represent actual structural or functional properties in the imaged object, or the representation in the imagery is somehow distorted or otherwise unsatisfactory.

The image processor IP is capable of producing enhanced imagery, such as artifact reduced or contrast enhanced. For example, possibly artifact ridden input imagery IM as received at the input port IN' of the image processor IP is processed into output imagery IM' and is output at output port OUT'. Operation by the image processor causes the artifacts to be reduced or entirely removed. In addition, or instead, a low contrast image IM, acquired with no or little contrast agent, may be processed by image enhancement processor IP into a higher contrast image IM'.

The output imagery IM' may be mapped on a suitable grey value or color palette and may then be visualized by a visualizing module (not shown) on a display device DD.

The image enhancement processor IP may hence assist a diagnostician in properly interpreting the input imagery IM by using the enhanced imagery IM'. The image processor IP may be run on a general purpose computing unit. The computing unit PU may be communicatively coupled to the imaging apparatus or to the imaging repository. In other embodiments the image processor IP is integrated into the imaging apparatus IA. The imaging processor IP may be arranged in hardware or software, or in a combination thereof. Hardware implementations may include suitably programmed circuitry, such as a microprocessor or microcontroller, an FGPA or other general purposes circuitry. Hard coded circuity is also envisaged herein such as an ASICS or on-chip system, or other. A dedicated processor, such GPU (graphical processing unit), may also be used.

Referring now in more detail to the nature of the imagery to be processed, this can be conceptualized as data structures in ID, 2D or 3D or even higher dimensions (eg, time series of images) comprising a plurality of numbers. Depending on the contrast conferring mechanism that underlies the imaging, the numbers represent intensity values of a physical quantity or phenomenon to be imaged. The numbers may be referred to herein as image values. The data structures referred to above may include one or more n-dimensional matrices, or "tensors" (n>3). Suitable values for $n$ are 1, 2, 3, 4 or n>4. The image may be greyscale or color. Color imagery may be encoded in an RGB scheme or another suitable encoding scheme.

For instance, the image values may be represented in rows and columns $i,j$ to represent spatially two dimensional structures. Spatially three-dimensional image values may be represented as rows and columns $i,j$ and a depth component $k$.

In embodiments, the image may be represented in a 2D structure with rows and columns $i,j$ but the image in fact forms a section or sub-space of a three dimensional volume such as the slice images of a CT 3D volume. Similarly, MRI volumes may also include 2D slice images which are sections in 3D. 2D or 3D imagery acquired through time may be represented as a 3D or 4D image data, respectively, with the third or fourth component representing acquisition time.

Even though the imagery represents 2D structures, at times a higher dimensional representation may still be used such as in color images encoded in RGB. An RGB image may be represented as a three dimensional structure with the two spatial dimensions $i,j$ corresponding to structure or function in the patient, whilst another component represents the red, green and blue image values respectively for any given image location $i,j$. In other words, 2D color image maybe represented as a 3D volume formed by the super position of three distinct 2D images each representing respectively the red, green and blue image values for a given image location.

Accordingly, spatially 3D color imagery acquired through time may thus be represented as a seven-dimensional tensor: three spatial dimensions, three dimensions for the color values, and one dimension for time. A grey value image may be represented without an additional depth component.

Turning now in more detail to the computerized imaging processor IP, this includes in embodiments a pre-trained machine loading component MLC. The pre-trained machine learning component MLC includes a pre-trained machine learning model V. The machine learning model V, such a neural network structure or other, has been previously trained by a computerized training system TS to be described more fully below. Training is based on a set ("corpus") of training data TD. "Size" herein refers to the number of data value (numbers) entries in a matrix or tensor. "Dimension" refers to the number of spatial arrangements. For instance, a matrix (eg, an image) with pixels 50x50 has a larger size than an image 40x40 or 50x40. But both have the same dimension. A three channel image 50x50x3 has a larger dimension (3D) than a 2D image at 50x50. Because the 3D image also has more data points, it is also larger in size.

The training data TD includes in particular historic imagery. In embodiments, the training data includes historic x-ray, MRI, UV, PET/SEPCT or other images collected from previous patients. The corpus TD of training data comprises pairs of historic images. In embodiments, one member of the pair is low contrast and the other member of the pair is a higher contrast image. The high and low contrast images per pair do not necessarily derive from different contrast media concentrations. For example, the pairs of low/high contrast images may be generated "synthetically", using spectral or dual imaging techniques. Specifically, the low/high contrast image pairs may be are generated by using low keV images, which could be obtained in a spectral scan that also provides a conventional CT image to define such a low/high contrast image pair. In addition, or instead, an Iodine map could also be obtained in a spectral scan that ,together with the conventional CT image, also provides such a pair. In this case, the counterpart high contrast image could be obtained by combing the Iodine map, by addition or multiplication, with the low contrast image. Alternatively, the iodine map may be so combined with the low contrast image by multiplying the map first with some factor (a control parameter) and to then add the Iodine map (with the multiplied-into factor) to the low contrast image. Alternatively still, it may also be possible to form the contrasted image member of a pair by registering a high contrast image of any modality with a low contrast image of any or the same modality.

In image enhancement applications for artifact reduction, the training set TD may comprise pairs that include an artifact ridden image and a counterpart artifact free image (or an image with artifacts of lower severity).

In general, images from the training set TD will be referred to herein as "training images/imagery".

The machine learning model V is in general operable in two modes, in training mode and in deployment mode. The training mode occurs before deployment mode. The training mode may be a one-off operation but may be done repeatedly. More specifically the machine learning model V comprises an architecture and a plurality of parameters arranged according to the architecture. These parameters are initialized. A training system TS adjusts during training mode the parameters based on the received input training imagery. Once the parameters have been sufficiently adapted in one or more iterations, the so pre-trained model V may then be used in deployment in the machine learning component MLC of the image processor IP as mentioned above. In deployment mode, the pre-trained machine learning model V can process the received input imagery to reduce or remove image artifact as mentioned above. Crucially, the input imagery IM in deployment may not be part of the training imagery, so that the machine learning model V has never "seen" the input imagery before. After suitable training, the machine learning model V is capable of transforming the input imagery into higher contrast version IM' prime of the (lower contrast) input image IM.

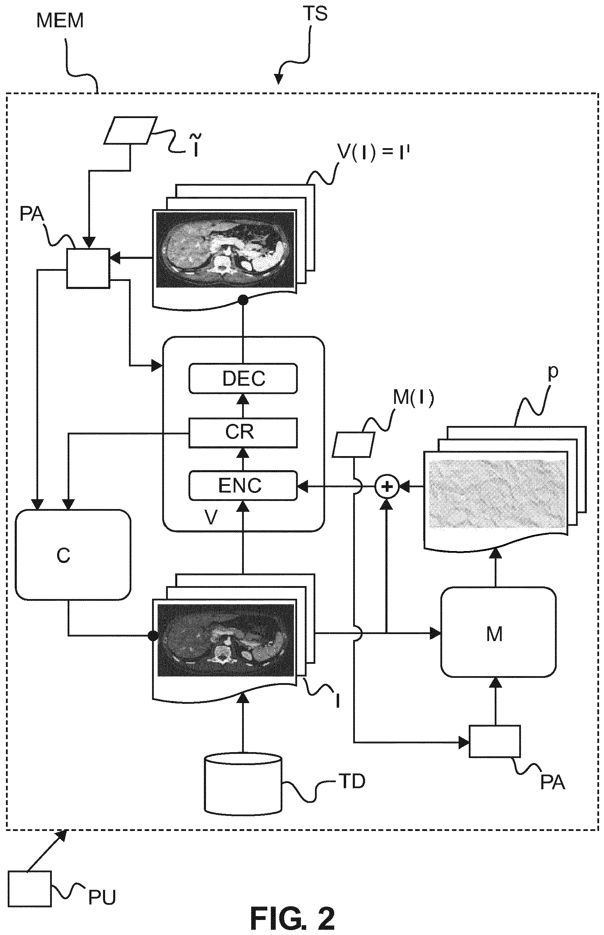

With reference to the block diagram in Figure 2, operation of the proposed computerized training system TS will now be explained in more detail.

The training system TS may reside in one or more computer readable memories MEM. The computerized training system TS may be executed by a processing unit PU such as general purpose CPU circuitry or, preferably, specialized circuitry such as one or more GPU's or others. The components of the training system TS may be implemented on a single computing device or on a group of computing devices, such as servers and others, in a distributed or "Cloud" architecture connected in a suitable communication network.

The ML system TS comprises, in addition to the target model V to be trained, one or two auxiliary machine learning models C and M. These auxiliary models are referred to herein as the code cycle consistency decoder C ("code checker C" for short) and the adversarial mix structure generator M ("scrambler M" for short)The reason for the naming will become apparent further below. The one or two auxiliary models C,M are trained alongside the target model V. In parameterized embodiments, some or each of the machine learning models V, C and M are initialized with parameters. The parameters of the three models will be collectively referred to herein as a "configuration" of the training system TS. If reference is made to parameters of a specific one of the two or three models, these parameters may be referred to as a configuration of the respective model. On occasion, we will simply refer to "the parameters" of the respective model.

Broadly, in training mode, training data TD, including a low contrast image I is fed into the target model V. A parameter adjustment unit PA adjusts the configuration of the training system TS based on the training data TD. Operation of the parameter adjuster PA is driven by one or more objective functions $F$. The adjustment of the configuration is so as to improve the objective function(s) $F$. The parameter adjuster PA computes the adjustment of the configuration based on the current configuration, and the outputs produced by the two or three models. The parameters of the two or three models are jointly adjusted. Each model corresponds to different objectives. The objectives formulated in the suitably configured one or more objective function(s) $F$. The objectives will be explained in more detail below.

Broadly, and with continued reference to Fig 2, in embodiments three machine learning models, the target model, the code checker and the scrambler M are coupled through their outputs. The configuration is jointly adjusted by the parameter adjuster PA.

More specifically, the code checker C receives data produced by the target model V and the scrambler M feeds data into the target model V. In more detail, the training input image I, such as low contrast training image, from set of training data TD is fed into the target model V. The target model V transforms the training input image $I$ and produces at its final output a training output image $I' = V(I)$. The training output image V($I$) and the training input $I$ have the same size and/or dimensionality. The aim is to produce enhanced imagery. Specifically, the target model V is to be trained in the system TS based on the training data TD so that the training output image I'=V($I$) represents a higher contrast version of the (lower contrast) input training input image $I$. In general, however, there will be a deviation between the high contrast target image $\tilde{I}$, that is associated with the training input image I, and the training output image V(I) so produced. Based on this deviation, and as one part of the optimization process, the parameter adjuster PA aims to adjust the parameters of the target model to foster better correspondence between the training output image V(I) and the target image $\tilde{I}$.

As will be explained more fully below, during processing of the input image $I$ by target model V to produce the training output image I', the training input image $I$ is first transformed into an intermediate representation with changed size and/or dimensionality. This representation, which is internal to the model V, will be referred to herein as "the central representation" CR or "code", for reasons that will become more apparent further below.

The code checker C then receives the code CR and processes this to produce an estimate of the training input image I. As a second part of the optimization, the parameter adjuster PA aims to adjust the parameters of the code-checker C so that the estimate corresponds to the training input image I. In other words, the coder checker C is trained by the parameter adjuster PA to encourage the target model to produce, at the central representation stage, a version that can be decoded by the code checker in a manner that tends to correspond to the input image. There will in general be a deviation, or "residue", between the decoded code CR (the said estimate) and the training input image, and the parameter adjuster PA adjusts the configuration based on this residue. Operation of the code checker can be conceptualized as a "consistency check", whether the code CR generated by the target model V (in particular by the target model V's "encoder stage") already correctly captures features of the original training image I.

In addition to the code checker C, or instead thereof, there is the scrambler M. The scrambler M acts adversarial to the objectives in respect of the target model V. More specifically, in embodiments it is not a training image i from the training corpus TD that is fed into the target model, but the training image I is first scrambled by including a disturbance pattern, random or otherwise, to produce a scrambled version of the training image i, referred to herein, in consistence with the above, as the training input image I. Instead of the original, low contrast training input image $i$, it is now the so scrambled training input image I= M(i) that is fed into the target model V as previously described. In a third part of the optimization, the configuration is adjusted by the parameter adjuster PA so as to achieve a small deviation between the scrambled image and the residue that resulted from the processing of the code checker C.

Thus, the scrambler M and/or the code checker model C are trained jointly with training the target model V to obtain a robustly performing target model. The two auxiliary networks furnish a regularization structure to regularize the training of the target model V. Although we made reference to the operation of "the" parameter adjuster PA in relation to all three optimization parts, it is not necessarily required that a single entity is used, Two or three parameter adjusters may be used, one for each model.

The actions of both auxiliary models, the code checker C and scrambler M foster better robustness and allow more efficient combatting of overfitting effects. As mentioned, the three models may be used in combination as shown in Figure 2. When used in this triple setup, a large boost in contrast has been observed in the order of about 35-40%, in particular 38%. However, it is not necessarily required to use all three of the models. Embodiment are envisaged that merely use a double architecture setup where only one of the target model B and the coder checker C is used together with the target model V. In either one of these dual setups, a still appreciable 20% boost in contrast gain has been observed. In fact, even a two-fold or even three-fold contrast boost can be expected in certain circumstances, depending on the target image in training. For example, if the target image is a 50keV image, then a two-fold contrast boost may be expected. If the target image is a 40keV image, a three-fold boost may result, and accordingly for target images at other energies,

The regularization afforded by the proposed two or three model-training setup enables effectively boosting the training procedure and may result in a better training output image at better image quality. For example, a measured difference between the target image and the training output image will be smaller. This difference or "deviation" as it is referred to herein, may be measured by a suitable similarity measure, such as the $L^2$ -norm or a statistical measure such as the Standard Deviation (SSD). The training procedure will be explained in more detail below at equations (1)-(3b).

One, any two, or all three of the above described models may be implemented as neural network structures, in particular convolutional neural network structures. In particular, the target model V may be chosen as an auto-encoder network. In general, the architecture of the two auxiliary models, the code checker C and scrambler M, may have a similar architecture as the target model, so may likewise be arranged as autoencoders. In particular, the target model V and the code checker C may include multiscale functionalities to effect the effect size and/or dimensionality changing transformation. One particular type of autoencoder is the U-net architecture specifically envisaged herein in embodiments. U-net architectures have been described by Olaf Ronneberger et al in "U-Net: Convoluation Networks for Biomedical Image Segmentation", Medical Image Computing and Computer-Assisted Intervention (MICCAI), Springer, LNCS, Vol.

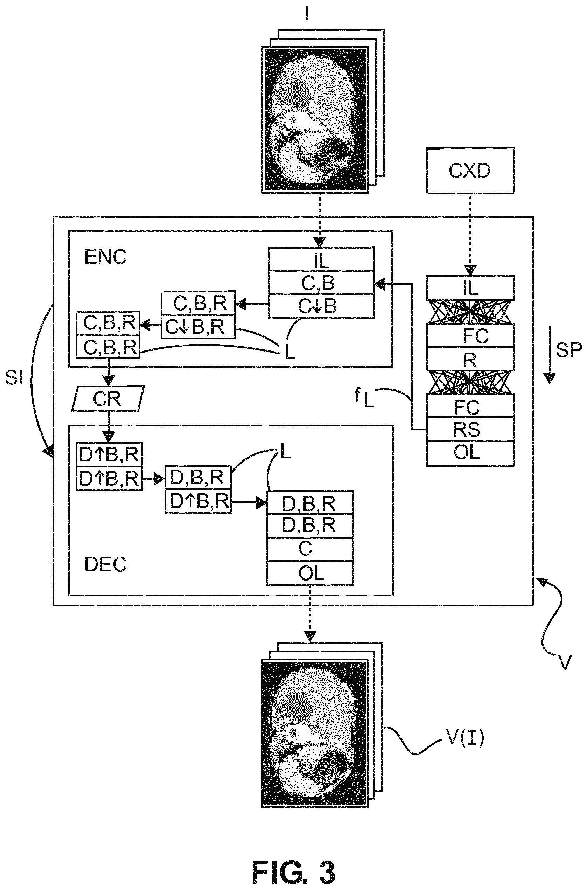

9351: pp 234-241, 2015. An embodiment of the target model V will be discussed in more detail below at Fig 3. In simpler, embodiments, the code checker C is a partial autoencoder, so may comprise only a decoder stage.

The above mentioned deviations or residues may be quantified by subtracting the involved images and by applying suitable similarity measure to the difference. This will be explained in more detail below at equations (1)-(3).

Turning now in more detail to the proposed target model V, this is configured to transform the input imagery, I, into a training output image I'= V(I) which is output at output interface OUT. The dimension and size of the training input imagery is preserved. That is, the dimension and preferably the size (number or rows and columns, etc) of the training input imagery, corresponds, or is equal to, the dimension and size of the training output image I' as supplied at output OUT. However, during the processing of the training input imagery TD, the training input imagery I is first transformed into a lower dimensional representation CR by an encoder component ENC of the target model V. In addition, also the size may be reduced. This lower dimensional and/or smaller sized representation of the training input imagery is reduced version of the "central" intermediate representation CR. The representation is "intermediate" in the sense that it does not form the final output. It is "central" in the sense that it is formed within the target model V during processing. The central representation CR is then up-sampled by a decoder DEC component, arranged in series with the encoder ENC, so as to increase the dimension/size of the central representation, so that, eventually, the dimension and/or size of the training output image I' matches the dimension and/or size of the training input image I. As mentioned earlier, the, in embodiments, lower dimensional and/or smaller sized representation CR may also be referred to herein as a "code", the encoder ENC thus "encoding" the received training input imagery I, whilst the decoder DEC is operable to recover or "decode" from that code the training output image I' having the same dimension and/or size as the original training input image I. There are also embodiments where the encoder ENC generates code of larger size and/or higher dimension than that of the input image to foster over-complete representations as will be explained in more detail below. In this alternative embodiment, the encoder ENC may produce the code CR at a larger dimension and/or size, but at a higher sparsity. In particular, regularization mechanisms may be used to promote over-complete and sparse codes, as will be explained in more detail below.

Turning first in more detail to the code checker C, the aim in relation to this component of the training system TS is to improve the performance of network V by adding additional training constraints over the code generated by the encoder part of network V. This is done in embodiments by using a deep multi-scale fully convolutional decoder network architecture for the code checker C. The code checker is trained to generate the input images given the code generated by network V. The code checker includes in particular a decoder stage to transform the code back in size and dimension, to match size and dimension of the initial training image, so that the two images can be compared by the parameter adjuster, to then adjust the configuration, in particular the parameters of the code checker.

Turning now to the scrambler M, in embodiments, this model "mixes" a scrambling pattern *p* with the original training input image to produce a scrambled version of the training image from set TD. This scrambling operation of the scrambler M may be thought of "adversarial" to the operation of the target model, whose aim it is to produce an enhanced version of the original input image (eg, with contrast improved). However, in fact, this artificial, adversarial scrambling causes the training system to arrive, in the end, at a target model that produces, in deployment, more robust and realistic enhanced images. Like the code checker, so the scrambler M helps avoiding overfitting. In overfitting, the training procedure gets "trapped" in unfavorable local estimation minima in search space, the search space being the high dimensional space spanned by all possible configurations.

The aim of using the scrambler M is to improve the performance of network V by "voluntarily" corrupting the input images in the training session. The corruption is done in such a manner so as to lead to more robust, generalized and effective code of network V. The amount, or magnitude, of corruption, suitably measured, is constrained and compared with the residue. The corruption could be done as illustrated in figure 2, i.e., by adding the output of scrambler M to the input images. Alternatively, the output of network M could be the corrupted images, i.e., excluding the "plus operator" from the scheme in Figure 2.

If a neural network set-up is used, as indeed envisaged herein in preferred embodiments, the network V may be implemented as an auto-encoder neural network as mentioned above. In addition, one or both of the auxiliary models M, C may be arranged as respective neural networks ("NN"). However, other machine learning architectures may also be used instead, such as Boltzmann machines, statistical or probabilistic learning, kernel methods (such as SVMs), etc.

The objective function(s) *F* is adjusted by parameter adjuster PA through one or more iteration cycles. During the iteration cycles, the configuration may be updated as a whole across all three models or may be updated alternately. For instance, in one cycle the current configuration of two auxiliary models are kept constant, while it is only the target model V's parameters that are updated during one or more follow-up cycles. Then, in one or more cycles, the target model V's current parameters are kept constant, and it is the parameters of one or both of the scrambler M and the code checker C that are updated and so forth. The number of iteration cycles are either pre-set or are user adjustable.

The iterations may be aborted once a stopping condition is met. A stopping condition may be formulated in terms of a convergence condition. Once the stopping condition is met, training terminates. The target model V is now considered sufficiently trained. For deployment, at the end of training, the current set of parameters of the target model V, together with the target model's V architecture, may then be copied or transferred to another computing unit, such as to the image processor IP. The target model V hence may no longer need to be embedded in the surrounding framework comprising the two auxiliary models M,C, the coder checker C and the scrambler M. In deployment mode, the target model V can be used as a stand-alone component to remove image artifacts or increase contrast, or otherwise enhance IQ. In deployment mode, the pre-trained target model V processes any newly received image IM (not from the training set), much like a training input image, to produce an enhanced output image IM' that has artifacts therein reduced or contrast increased.

Optionally, the training data TD may not only include image data but may also include non-image contextual data CXD associated with the respective training images. Contextual data CXD may include the imaging parameters, that is, acquisition or reconstruction parameters, as the case may be. If the contextual data is also fed into the training system TS during training, these are treated and are optimized alongside the image data. As will be explained more fully below, the non-image contextual data CXD may need to be reshaped by a reshaper module RS into suitable "pseudo-images" that are then processed alongside their respective training imagery with which they are associated.

If a neural-network set-up is envisaged, for one, or for any two, or for all of the three models V, M and C, deep learning networks are preferred. In embodiments, such deep learning set-up includes respective neural networks with one or more (preferably at least two) hidden layers between respective in- and output layers as will now be explained more fully with reference to Figure 3. This block diagram provides more details of the target model V presented herein as an auto-encoder in a convolutional neuro-network (CNN) set-up.

The training input data $I$ is processed in a processing path referred to herein as the imaging strand SI. Optionally, if the training is also to include non-image contextual training data CXD, this is processed in a separate processing strand SP including a reshaper RS. The contextual data CXD may be processed by the reshaper RS into pseudo-images that are merged with their respective training image data.

However, before explaining the neural network architecture of the target model V in Figure 3 in more detail, some neural network concepts are introduced first to facilitate the further description.

Broadly, the NN structure of the target model V includes a plurality of nodes, at least partly inter-connected and arranged in different layers L . The layers L are arranged in one or more sequences. Each node is an entry capable of assuming a value and/or can produce an output based on input it receives from one or more nodes of an earlier layer L.

Each node is associated with a certain function which can be a simple scalar value (node weight) but can also be with more complex linear or non-linear functions. A "connection" between nodes in two different layers means that the node in the later layer can receive an input from the node in the earlier layer. If there is no connection defined between two nodes, no output of one of the two nodes can be received by the other node as input. The node produces its output by applying its function to the input. This can be implemented as a multiplication of the received input by the scalar value (of weight) of the node. More than one input from different nodes may be received by a node in a later layer. The different inputs may be consolidated by a consolidating function g to produce a consolidated value and it is this consolidated value to which the receiving node applies its own function $f$ to produce the output for the node. For instance, g may map the received inputs from earlier nodes into a sum of products (eg, dot product) and the node's function f may then be applied to said sum of products.

A connection may have its own weight ("connection weight"). The weight is used to weigh output that travels along that connection. The consolidated function may combine all the received input for a given node using the connection weights to produce the consolidated dot product output. The connections between layers may be fixed or may vary during processing. Some layers may be fully connected whilst others may not be. Two layers are fully connected if each node in the later layer is connected with all nodes of the previous layer. In partially connected layers, not all nodes in the later layer are connected to all nodes in the earlier layer.

The outputs of all nodes of a given layer may be referred to herein as the "output of the layer" and the inputs received from an earlier layer may referred to herein as "the input of the layer".

Each layer may be represented as a matrix of two, three or higher dimensions. If the dimension is three or higher, the matrices are commonly referred to as a tensor. The nodes implemented as entries in those matrices or tensors. Each layer has a size (rows $i$ and columns $j$), a depth $k$ (which may be larger than 1) and possibly further dimensions. Alternatively, the size, depth and the one or more further dimensions may be realized by other data structures than matrices or tensors.

Target model V in a neuro-network structure includes one or more initial input layers IL and one or more final output layers OL. The initial input layers IL are where the initial training image I and, optionally, the contextual data $CXD$ is received, by populating the nodes or by presenting the final result for further proceeding by the conversion circuity CC or other, respectively.

The layers L, as shown in Figure 3, are arranged in a deep architecture. The architecture includes one or more hidden layers between the output layer(s) OL and the input layer(s) IL. The number of hidden layers defines the depth of the network G. For instance, a single hidden layer envisaged in some embodiments amounts to a depth of "one". Preferably, however, there are at least two hidden layers used. Preferably, there is an even number of hidden layers, such as 4, 6, or more. The input received from an earlier layer at a hidden layer will be referred to as an intermediate input, whereas the output produced by the hidden layer passed on to a subsequent hidden layer will be referred to as an intermediate output.

In general, in the NN architecture of model V the training input data IM, such the training input image, is applied as initial input at the one or more input layer(s) IL. The data is then sequentially transformed as the data (image IM or parameter *Ip*) passes through the layers in sequence. At each layer an intermediate output is produced which then serves as intermediate input for the next layer etc., at each instant the respective layer acting of the received intermediate input by applying thereto an operation until a final result emerges at the one or more output layer(s) OL. The NN architecture, envisaged herein is preferably of the feed-forward type where, as described above, the data propagates forward from layer to layer. Alternatively, recurrent architectures may also be envisaged herein, where one or more layers are revisited during processing.

Different types of layers L may have different functions and hence apply different operations. We now turn first to discuss the different types of layers, some or all envisaged herein in different combinations and sub-combinations.

NN layer types envisaged herein include any one or more, or all of the following in combinations: fully connected layers FC, convolution layers C, deconvolution layers D, up-sampling layers ("↑"), down-sampling layers ("↓"), activation layers R as shown in Figure 3. The layer types are grouped into units to form various operational units, for each scale level s. For example, deconvolution or convolutional layers may be combined with an up-sampling or down sampling layer and an activation layer. For instance, the expression "C, ↓, R" in Figure 3 indicates a group of layers, arranged in sequence as a convolutional layer C followed by a down-sampling layer ↓, and then by an activation layer R a rectifier unit R. Although grouping layers into such units of 2, 3 or more layers can have implementational advantages when expressed as matrices/tensors and matrix/tensor multiplications, the grouping is not necessarily envisaged in all embodiments.

Turning now in more detail to the activation layer R, this may be implemented using any non-linear function, including logistic-based sigmoid functions, *arctan, softmax,* rectifier function ($x^+=max(x,0)$), or others. A layer that implements the rectifier function may be called a rectified linear unit (ReLU). The activation layer R implements a nonlinear function that is applied to the values in each node to introduce a non-linearity to enable the MLC to capture nonlinear pattern. The size of the (intermediate) input layer is preserved by the rectifying layer R. Layer R also serves as an "importance filter" to remove or mitigate an input if this is below a threshold. An input from a node may be completely annulled and hence not forwarded at all to the next layer despite there being a connection. The node is then said not to "fire" and this event is then recorded by forwarding "zero" to the next layer. The proportion of not firing nodes in a given configuration may be expressed as the sparsity of the MLC.

In addition, or instead of ReLUs, drop-out layers may be used in embodiments. These layers also introduce non-linearities by randomly cancelling connections between nodes of two layers.

Turning next to fully connected layers FC, the layers envisaged herein in MLC are not necessarily fully connected although in embodiments the network MLC does include two or more fully connected layers. Fully connected layers are shown as FC in Figure 3 above. The fully connected layers FC represent more traditional, non-convolution NN components where each node is associated with its activation function and a weight. The activation function for each node may be organized into a separate operational layer. Each node in one layer of the FC receives an input from all nodes in the previous layer each weighted according to the respective weight for the connection, as explained above in the general introduction. This total input is then summed and evaluated by an activation function layer R. The activation function layer is applied to the weight of the respective node to produce a node output which is passed onto nodes in the subsequent layer. The advantage of using FCs are to model more complex, non-linear patterns.

The convolutional layer C and de-convolutional layers D (and/or the up sampling or down sampling layers) are examples of non-fully connected layers. More particularly, these layers are not fully connected to all nodes of the earlier layer. In addition, the connections vary when processing the (intermediate) input from the earlier layer.

In convolution layer C, each node of the intermediate output is obtained by convolving the convolution layer with a sub-group of nodes of the earlier layer, thus involving only a sub-set of all possible connections. The connections are then redefined to single out a new group of nodes for the next intermediate output layer and so on, until the whole (intermediate) input layer has been processed.

The convolutional layers C may be structured as matrices with size preferably odd-numbered, such as *3x3* or *5x5* with a center position. The convolutional/de-convolutional layer may also have a depth that corresponds to that of the depth of the intermediate input to which it should be applied.

The size of the convolutional/de-convolutional layer is in general smaller than the size of the intermediate input on which it acts. Just like in conventional convolution, the convolutional layer may be conceptually thought to slide over its (intermediate) input layer and is applied selectively to different groups of nodes to produce filtered nodes as an (intermediate) outputs. The convolving operation itself may involve forming sums of products between the nodes of the convolution layer and /or all nodes within the instant group in its intermediate input layer. The filtered node is the central node of the odd-sized matrix of the convolutional layer.

The shifting to a new group of nodes in the processing of the convolutional layer may be conceptually understood as a sliding the convolution layer C with stride=n (n being a natural number) over the (intermediate)input to produce the (intermediate) output for each group nodes, respectively. The stride is a design parameter of the CNN that indicates the extent of each shift. For instance, stride n=1 means that the new group is obtained by effectively shifting the layer C by one node when redefining the connections for the next group of node whose values are to be convolved to obtain the value of the next (intermediate) output node. For stride n=2, one column or row of nodes is skipped and accordingly for n>2. It will be understood that, instead of the sliding window approach described above, the input layer to be processed by the convolution layer may be instead broken up open into parts (tiles), and each of these are then convolved with the convolution layer separately.

Zero padding may be used if the convolutional layer extends beyond the outermost nodes of its intermediate input layer on which it acts. The convolutional/de-convolutional layer may be applied in sequence as described or may be applied in parallel in the whole of the intermediate input layer.

The de-convolutional layer D is essentially an inverse operation to the convolution caused by the convolution layer C. Whilst the convolution layer maps, initially, from pixels to features of progressively higher level, the deconvolution operation maps features back down to pixels. Functionally, the deconvolution can be formulated in terms of convolution operations as used in the convolution layer discussed above which are then summed. See for instance section 2 in M D Zeiler et al in "Adaptive Deconvolutional Networks for Mid and High Level Feature Learning", 2011 International Conference on Computer Vision, Barcelona, Spain. The de-convolutional layer D may also be represented as a matrix with appropriate depth.

As such, the convolutional and de-convolutional layers do in general preserve the size of their (intermediate) input.

The down-sampling layer is similarly structured as the convolutional/de-convolutional layers C, D, but they act on its input data differently. The down-sampling/up-sampling layer (also referred to herein as simply "down"-or "up-samplers") may be odd- or even-sized. The down sampling layer lumps together a group of nodes in the earlier layer to produce a single node for the subsequent output layer, thus reducing the spatial (less rows and/or columns) of the (intermediate) input layer. This can be done by forming an average or by picking the maximum/minimum value or any other designated value from the group of nodes covered. The size of the group corresponds to the size of the down sampling layer.

The up-sampler acts quasi-inversely to the down-sampler and produces at its output a larger set of nodes, preferably by interpolation between input nodes. Convolution/Deconvolution and the up-sampling/down-sampling functionality may be combined in the same layer. For instance, convolution and down-sampling may be achieved as a convolution with stride >1, such as 2 or larger. In a similar fashion, the deconvolution may be combined with the up-sampling functionality.

Further layer types may include batch normalization layers B. These layers implement a normalization of gradients in the previous layer. This normalization prevents or reduces gradient saturation. In gradient saturation, gradient magnitude reduces too rapidly during iterations. Similar batch normalization layers have been described by Sergey Ioffe et al in "Batch Normalization: Accelerating Deep Network Training by Reducing Internal Covariate Shift", available online T arXiv:1502.03167v3 [cs.LG] 2 March 2015.

We will now turn to explaining in more detail the processing of image data in imaging strand SI of target model V, with continued reference to Fig 3. In general, in image strand SI, the number of up sampling layers in decoder stage DEC corresponds to the number of down sampling layers in the encoder stage ENC. In one embodiment the encoder ENC of SI includes three down sampling components and the decoder DEC includes three up sampling components. The same may hold true for the convolution/deconvolution layers C, D. In Fig 3, the layers L are grouped into units. This grouping is conceptual rather than implementational. The logic of the grouping in Fig 3 is that each unit causes a down- or upsampling.

Generally, in some embodiments, the last layer L (excluding ReLUs) in encoder ENC is a downsampler ↓ to arrive at the low dimensional representation CR and this is then followed in the decoder section DEC by at least one upsampler ↑. The last layer downstream layer in the encoder ENC provides the central representation CR in form of a two or higher-dimensional matrix with entries. The more zero or negligible entries there are, the sparser the code CR, and this is preferred. More generally, there is at least one downsampler in the encoder END section, and there is at least one upsampler in the decoder DEC section. This "bottleneck structure" allows implementing the encoding/decoding principle in autoencoder based embodiments of model G. Alternatively, over-complete variants of the AE architecture are also envisaged herein, where there is not necessarily a spatial down/upsampling, but where instead sparsity-based regularization is used, of which more further below. In alternative embodiments, there is no such bottleneck, but the encoder ENC performs one or more upsampling operations and then the decoder performs a corresponding number of downsampling operations, so as to achieve an over-complete representation where the code CR has a higher spatial dimension than the training input image I and the training output image I'. This autoencoder embodiment with over-complete embodiment is preferably used with sparsity enforcement by regularizer functionality, as will be explained in more detail below.

In addition, there may be at least one convolution layer C in the encoder ENC section and at least one deconvolution layer D in the decoder DEC section. The order of convolution and downsampler in the encoder stage ENC is preferably convolution first and then downsampling but this may not necessarily be so in all embodiments. Similarly, in the decoder DEC section there is deconvolution first and then upsampling although this order too may be reversed in embodiments.

To be sure, the processing sections ENC and DEC are conceptually inverse, but will in general not yield unity, so $ENC^{-1} \neq DEC$.

In embodiments, the encoder ENC of SI includes three-layer units. Each unit comprises, in sequence, a convolution operator followed by another convolution, a down sampling and a rectification R. More or less than three of such units may be used instead in alternative embodiments.

In embodiments, in the decoder section DEC, the convolution layers C have size $n \times n \times d$ (or larger), preferably each followed by a rectified linear unit (ReLU). The spatial dimension could be any suitable number, such as 3,5, etc whilst the depth $d$ is a function of color channels (if any) and the number of channels required for the reshaped contextual parameters CXD, as will be explained in more detail below in relation to reshaper strand SP. Two or more convolutions layers C may be used to change scale. The last convolution of each scale may be done with stride 2 for down-sampling/downscaling. In the embodiment of Fig 3, three feature scales are realized as there are three pairs of up/and down-sampling operations in DEC and ENC, but, in alternative embodiments, more scales, or less scales are also envisaged.

The decoder DEC section of strand SI may complementary mirror the structure of the encoder section ENC and includes correspondingly the same number of units, but in each unit, each occurrence of convolution is replaced by de-convolution layer and each occurrence of a down sampling layer is replaced by an up-sampling layer. The last, downstream, layer in the decoder DEC preferably ensures that the final output may also allow zero nodes. For otherwise, one is limited to larger than zero values because of the preceding activation layer R. This last layer may be implemented as shown as an additional convolutional layer C to provide the final decoding result, but this may be optional. Preferably, this last convolution has size *1x1x1*.

In embodiments, in the decoder DEC 3x3x3 (or larger filters) deconvolution layers D are used, preferably each followed by a rectified linear unit (ReLU). Two or more deconvolution layers D may be used to reverse scales as changed in the encoder ENC. The last deconvolution of each scale is done with stride 2 for up-sampling/upscaling. The number of scales in the decoder section DEC section is usually equal to the number of scales in the encoder ENC section.

Preferably but not necessarily in all embodiments, a typical number of convolution filters in each layer in scale $s$ is $(2^3)^s c$, where $s = 1,2,3, ...$ is the scale (the input scale equals 1) and $c$ is a network control parameter, where we found that usually the best performance is obtained in an over-complete setting, in which $c > 1$.

Other combinations or other arrangements of functional layers in the two sections DEC and ENC of the SI are also contemplated herein, but preferably the number of up sampling and down sampling layers and/or the convolution and deconvolution layers in the two sections DEC, ENC are, respectively, the same.

Optionally, some or each of the units may include one or more batch normalizers B arranged between a convolution C or deconvolutional D layer and an activation layer R.

We now turn now in more detail to optional reshaper RS and the processing of non-image contextual CXD in contextual data processing strand SP, where, for instance, the imaging parameters, acquisition parameters, or patient descriptive data (age, sex, patient history, etc) may be processed. The reshaper strand SP includes, in embodiments, three hidden layers. Specifically, there is envisaged, in sequence, a fully connected layer FC which is followed by a rectification layer R which is in turn followed by a second fully connected layer FC. A single fully connected layer may be used instead, or more than three hidden layers, in particular more than 2 FCs, may be used.

Functionally, the imaging parameter strand SI is configured to act as a reshaper of the set of imaging parameters. In other words, at output OL of strand SP a "pseudo-image" is formed based on the contextual date CXD received at its input layer IL. The imaging parameters are reformatted into a matrix/tensor with size equaling the input image IM. This pseudo-image is then merged as indicated by arrow $f_L$ (or "feedline") with the initial image data IM received at the input layer IL of the SI strand.

Convolutional layers have a certain depth and can act on a multi-dimensional layer. The depth of convolution may correspond to the number of channels of the imagery to be processed. For instance, a convolutional layer applied to a color image may have a depth of three so as to serve each of the three color channels RGB. The convolution operations in each of the three layers may be different for each channel.

In embodiments, it is proposed herein to include the reshaped image parameters (that is, the pseudo image) as additional channels into the training input imagery I and to configure the convolutional/de-convolutional layers in the SI section to have an additional depth that is configured to process the pseudo-image that is the reshaped image parameters. In this sense the imaging parameters and the actual image data in I are merged into a multi-dimensional compounded image where the imaging parameters are included as an additional dimension or layer into the actual image data. This allows the compounded image to be processed by multi-channel convolutional/de-convolutional layers whose depth corresponds to the actual dimensions of the image data I, plus one (or more) dimension(s) for the imaging parameters Ip.

In embodiments, the reshaper SP reshapes the output of the last fully connected layer FC to a representation of one or more matrices or volumes or tensors, which may be called herein an "imaging parameter volume" or "pseudo-image". The size of each imaging parameter volume equals the size of the input image I. The imaging parameter volumes are fed in additional channel(s) to the imaging strand IS. The number of additional channels corresponds to the number of imaging parameter volumes produced by the reshaper SP. The feeding-in into the strand SI may be done by populating each output value of the last fully connected layer FC to a separate imaging parameter volume, where in each case, the respective entire volume is filled-up by the same output value. Other embodiments of merging image data V with non-image data *CXD* are also envisaged. Using the above described multi-channel technology in the context of CNNs is merely one embodiment. However, similar applications of the above merging technique in more general NN or non-NN contexts are also envisaged herein.

The imaging parameters, as applied to the input layer of strand SP, may be represented in one or many more dimensions. The imaging parameters are preferably encoded in a suitable numeric format or may be so mapped from classes to numeric values. The imaging parameters provided as one or more vectors or matrices at the input layer IL in strand SP of network MLC. The dimension of the vector or matrix, or indeed tensor in general equals that of the image data IM.

A similar architecture as shown in Fig 3 may also be used for the code checker and/or the scrambler M. In embodiments, the code checker merely includes the decoder portion. In embodiments, the code checker and/or the scrambler do not include the processing strand SP for the non-image contextual data CXD. Specifically, the coder checker C and/or the scrambler M are in embodiments not envisaged to include fully connected network portions, such as the reshaper RS. However, in alternative, embodiments, the code checker and/or the scrambler M include a processing strand with reshaping for the contextual data CXD to process the context data throughout the whole network together with the image data.

Referring now in yet more detail to operation of the parameter adjuster PA, this is configured to update or to adjust the configuration of the training system TS so as to improve one or more objective functions F(.). The respective objective functions for each of the three models are improved jointly or separately. Some or all of the three objectives in relation to the three models V,M,C can be combined into a single objective function.

The adjustment of the objective function may be formulated for the respective models V, M, C as a utility or cost function. The parameter adjuster PA is configured to adjust, in given iteration, the current configuration to as to increase the utility and/or to decrease the cost, thereby attempting maximization and/or minimization, respectively. The combination of the objective functions for the respective models into a single objective function can be done multiplicatively or additively. Preferably it is done additively as will be explained below in more detail.

Broadly, the objectives as represented by the one or more objective functions F can be divided into an objective function $F_V$ in relation to the target model V and respective objective functions $F_M, F_C$ for the scrambler M and the code checker C, respectively. As the optimization proceeds, *V* produces more realistic high contrast images I'.

In general, in embodiments, the objective functions F may include one or more fidelity terms, that quantify the mentioned residue, deviation or magnitudes, and how well the respective objectives for the respective models V,M, C are achieved.

More specifically, in embodiments, the objective functions $F_V, F_M, F_C$ may be configured as:

$$\min_{\theta'} F_V(\theta') = \sum_{i=1}^{n} \left( \left\| \tilde{I}_i - V(I_i) \right\|_{q_1}^{q_1} \right) \tag{1a}$$

$$\min_{\theta'; \theta''} F_C(\theta', \theta'') = \sum_{i=1}^{n} \left( \left\| I_i - C\left( V_{Encoder}\left( M(I_i) \right) \right) \right\|_{q_2}^{q_2} \right) \tag{1b}$$

$$\min_{\theta'''} F_C(\theta'''): \sum_{i=1}^{n} \left( \lambda \| M(I_i) \|_{q_3}^{q_3} - \left\| I_i - C\left( V_{Encoder}\left( M(I_i) \right) \right) \right\|_{q_4}^{q_4} \right) \tag{1c}$$

wherein:

I, I'=V(I) and $\tilde{I}$ are the training images/training input images, the training output image, and the target image (associated with I), respectively;

$q_k$ represents a similarity measure, such as the $q_k$-norm, with $q_k$ =1,2,.. θ', θ'; θ''' are the parameter-subsets of the configuration, and relate to the parameters of the models V, M and C, respectively;

$V_{Encoder}$ is the encoder part ENC of target model *V* which generates the code CR; and

$\lambda$'s is a control factor that controls the contribution or "strength" of the respective term to the total cost *F*. The factor is optional. The control parameter may be unity;

*i* is an index that runs over the pairs (*I*, $\tilde{I}$) of training imagery, the objective functions in (1a),(1b),(1c) thus recording the respective accumulated costs for all summed-over pairs.

The minimization is done over $\theta$' to adjust V and minimizations are done over ($\theta$', $\theta$'') and $\theta$''', respectively, for C and M . The minimization operations may alternate by holding the parameters of V or M, C constant in turns, while adjusting the others.

As shown in eqs (1a)-(1c), each of the objective functions $F_V, F_M, F_C$ is an objective function in its own right, but with interrelated parameters. Some or each of the objective functions may be additively combined into a single objective function *F* and this may then be optimized (eg, minimized) at once. It will be understood that herein each minimization can be dualized into an associated maximization, such dual formulations being envisaged herein in embodiments.

Objective functions (1b),(1c) form a regularization framework round the target optimization (1a) in relation to target model V.

In target optimization (1a), the deviation between $\tilde{I}_i$, $V(I_i)$ is to be minimized and the parameters $\theta$' of the target model are adjusted by parameter adjuster PA accordingly, based on the optimization scheme chosen. The deviation is measured by a measure such as induced by the qi-norm applied to the pixel-wise different between the two images. Other norms or other measures are also envisaged.

Jointly with (1a), the optimizations (1b),(1c) in respect of the two auxiliary models C,M and performed to effect the regularization of (1a).

In optimization (1b) in relation to code checker C, the residue is minimized. The residue is the deviation between the back-transformed estimate C($V_{Encoder}(M(I_i))$) based on the scrambled training image $M(I_i)$ and the original training image $I_i$, A $q_2$-norm based measure may be applied to the difference image. The parameters of V's encoder $V_{Encoder}$ stage (which parameters form a subset of the parameters $\theta$'' of V) and the parameters of the code checker C are adjusted together by adjuster PA accordingly, based on the optimization scheme chosen.

In optimization (1c) in relation to scrambler M, the deviation between the magnitude of the scrambled image and the magnitude of the residue is minimized. The magnitudes are measured by as suitable measure. In embodiments, the measures are again based on the *q*-norm. Other measures are also envisaged. The two magnitudes may be quantified with measures based on different norms $q_3, q_4$ or on the same norm. The parameters $\theta$''' of scrambler M are adjusted, again based on the quantified deviation and the optimization scheme chosen. The cost, that is the deviation, as measured by $F_M$ may be negative.

Common values envisaged herein for the q-norms are $q_1 = 2$, $q_2 = 2$, $q_3 = 1$ and $q_4 = 2$ . Other combinations of $q_1$-$q_4$ with other numerical assignments are also envisaged. Again, using the q-norm to define a measure is merely according to one embodiment, and other measures, probabilistic, entropy-based or otherwise are also envisaged.

As mentioned, it is not necessarily the case that the training system includes all three models V,M,C as above in eqs (1). Other combination such as "V+M "or "V+C" are also envisaged. More specifically, in the embodiment V+C, the optimization scheme (1a-1c) simplifies to:

$$\min_{\theta'} F_V(\theta') = \sum_{i=1}^{n} \left( \left\| \tilde{I}_i - V(I_i) \right\|_{q_1}^{q_1} \right) \tag{2a}$$

$$\min_{\theta'; \theta''} F_C(\theta', \theta'') = \sum_{i=1}^{n} \left( \left\| I_i - C\left(V_{Encoder}(I_i)\right) \right\|_{q_2}^{q_2} \right) \tag{2b}$$

In embodiments (2a,2b), now there is no scrambler M, and encoder C now acts direct on the original training image, rather than on a scrambled version thereof. Target optimization (2a) is identical to (1a). q1, q2 may be different or the same. Values q1, q2 may be as defined above, or may be chosen in a different assignment.

In the embodiment V+M, the optimization scheme (1a-1c) simplifies to:

$$\min_{\theta'} F_V(\theta') = \sum_{i=1}^{n} \left( \left\| \tilde{I}_i - V(M(I_i)) \right\|_{q_1}^{q_1} \right) \tag{3a}$$

$$\min_{\theta'''} F_C(\theta''') = \sum_{i=1}^{n} \left( \lambda \|M(I_i)\|_{q_3}^{q_3} - \left\| \widetilde{I_i} - V\big(M(I_i)\big) \right\|_{q_1}^{q_1} \right) \qquad (3b)$$

In embodiments (3a), (3b), there is now no code checker C, in lieu of scrambler M. The residue in 3b is now based on the scrambled training image. Target optimization 3a is identical to 1a.

The optimization scheme as used in (1a-3b) may include gradient based techniques, such as (stochastic) gradient descent such as ADAM ("Adaptive Moment Estimation", by Diederik Kingma et al "Adam: A method for stochastic optimization", publ. arXiv:1412.6980, 2014), backpropagation, or other. In each case, the gradient is taken for $F_V, F_M, F_C$, over the respective parameter subsets $\theta'$, $(\theta', \theta'')$, $\theta'''$.

Specifically, in case one, any two or all three models are arranged as neural-networks, the backpropagation method may be used. Briefly, and as described elsewhere, backpropagation proceeds in two passes. In a first pass, an item of training data such as a training input image, with or without its contextual data, is forward "propagated" through the models given a current configuration. This yields training output images. A cost or utility is incurred as measured by the objective function, and it is examined which nodes in the models contributed more to the respectively observed cost or utility. This step can be done by examining gradients of the objective functions and the weights of the nodes are adjusted in a second pass, the backpropagation step, in proportion to their respective contribution to the cost or utility. Such backpropagation methods have been described elsewhere, for instance, in David E Rumelhart et al. in "Learning representations by back-propagating errors". Nature, vol 323, pp 533-536, 1986.

In embodiments where the autoencoder model is used for the target model V, or, more generally, where an "encoder decoder architecture" like neuro-network is used, it is preferable to have the above discussed bottleneck structure with the imaging strand IS including at least one down sampler arranged upstream the up-sampler, so that the (central) representation CR for the training input image has a smaller dimension than the input image. This forces the autoencoder V to produce a representation that may capture at a sufficiently general level, patterns or features which are thought to constitute artifacts.

However, as has been found herein, the auto encoder scheme can also be used with over-complete network architectures, where the hidden layer, in particular the last layer of the encoding section ENC, is spatially or dimensionally larger than the input image.

In general, over-complete representations attracted interest in signal processing theory, particularly due to their potential to generate sparse representations of signals. Such representations differ from the more traditional basis representation because they offer a wider range of generating elements; potentially, this wider range allows more flexibility in signal representation, and more effectiveness leading to exceptional results in various applications like signal extraction and data compression. Over-completeness is obtained when the number of degree of freedom (DOF) in the code is larger than the DOF in the input data. In a neural network setup or other. Over-complete representations are beneficially combined with sparsity enforcement regularization mechanisms, envisaged herein in embodiments for the training system TS.

The sparsity concept may be elucidated with reference to matrix theory. In matrix representation, a matrix is the sparser the more zero entries it has, or, more generally, the more entries it has that are below a negligibility threshold. More generally still, given any system of basis elements, such as in a finite or infinite dimensional vector space, a representation in that system of basis elements is the sparser the more basis elements have coefficients that are zero, or are below the negligibility threshold.

When such over-complete versions of the target model V or of the code checker C are used, it is preferable to apply a sparsity scheme to prevent overfitting and provide results that generalize well. In more detail, in autoencoders with such over-complete representation, the dimensionality changing actions of the encoder ENC and the decoder DEC are reversed relative to Fig 3. Specifically, in such an autoencoder model V, the encoder ENC up-samples the training input image to achieve a code CR with higher spatial dimension or larger size than the training input image, and it is the decoder DEC that then down-samples the code CR so that the training output image I' has again then same spatial dimension and size as the training input image I. Preferably, in autoencoders with over-completeness, (strong) sparsity enforcement is used, including one or more sparsity controlling analytical terms in the objective function, or using an automixing scheme.

The automixing scheme is in particular envisaged for the embodiments 2,2b where there is no scrambler. In the automixing, the training input images are altered before passing them to the target model of training input. In that sense automixing is similar to the scrambler M. However, in the automixing approach the alteration has a different purpose and effect. In automixing the input images are altered to foster sparsity.

Turning in more detail to the "auto-mixing" approach, in this embodiment of an implicit regularization functionality, a given input image $I_i$ is mixed with other imagery from the corpus TD to obtain a mixed image $I_i'$. The model V is then optimized to recover the given training image from the mixed image during training. In other words, in training, $V_i'$ is chosen as input and the "uncorrupted" image $V_i$ the target. More specifically as envisaged herein, for a given training

image $V_i$:

$$I'_i = V_i + \alpha I_j + \beta, \qquad\qquad (4)$$

Where $I'_i$ is a combo-image combined from additional component images where $I_j, I_i$ from the training corpus that may be randomly selected, and $\alpha$ and $\beta$ are mixing parameters, where usually $0 < \alpha < 1$. More than one additional samples may be used. $\beta$ is an optional parameter that may be used to ensure conformity with certain units, such as HU (Hounsfield units) or other.

The auto-mixing may be understood as a target corruption to foster sparsity. The corruption could be done once, or it could be done again for each epoch (cycle over complete corpus of training images). The so corrupted samples $I'_i$ or combo-image are used to train the network MLC.

The auto-mixing is achieved in embodiments by linear combination or by affine combination, as illustrated above. It will be understood, however, that other functional combinations may be used instead, rather than affine or linear ones.

The component images $I_j$ that are auto-mixed with the first image $I_i$, may be selected from slice images from different $z$ positions from the same CT volume for example. For instance, if $I_i$ is associated with position $z_i$, then the component images may be drawn from $n$ follow up positions at $z_k > z_i$, $k=1...n$. Alternatively, the component images $I_j, I_j$ may be drawn for previous positions $z_k < z_i$. As a further alternative, one or more component images are drawn from $z_k < z_i$ and other, one or more are drawn for $z_i < z_k$.

In yet other embodiments, the mixed-in images are images obtained at different times, as recorded in time series $t$ image data, such as (2D,$t$) or a 4D volumes. As above in the spatial embodiments, a given image at time $t_1$ may be mixed with chronologically earlier, or later component images, or with both.

The auto-mixing embodiment may also be used in other neural network architectures than the one in Figures 2,3.

In embodiments and explicit regularization may be used to encourage sparsity, rather than the implicit scheme that is the automixing approach. Optionally, there may be one or more terms that promote low code complexity, such as low sparsity, of the encoder ENC stage output in the target model V. For instance, in embodiments a an explicit term $\|V_{Encoder}(I_i)\|q_3$ s introduced additively in (1a),(2a),(3a) as an explicit, that is analytic, regularizer term that promotes encoder stage $V_{Encoder}$ to produce low complexity code, eg sparse code. The $q_k$-norm may be used for regularization such as the $L^1$ norm, $q_3 = 1$.

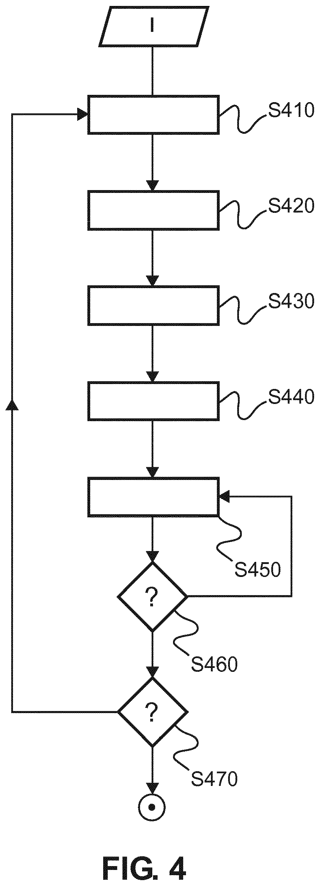

Reference is now made to Figure 4 which shows a flow chart for a method for training a machine learning model for image enhancement. It will be understood herein the above described method may be used to implement the above described system in Figure 1-3 although the method and the steps describes herein below are not necessarily tied to the systems described in Figure 1-3. The method including some or all of the steps described below may hence also be construed as a teaching in their own right.

At step S410, a training image from a set of training images is received.

The set of training images comprises, in particular, pairs of training images, one image being a lower contrast version of the other image in the pair. Both the high and low contrast version of a pair represent preferably the same or similar anatomies of interest of a patient. It is not necessary herein for each pair to represent the same anatomy. The high contrast version in each pair will be referred to herein as "the target image" and is associated with its lower contrast counterpart in the same pair. In particular, at step S410, the low contrast image of a pair in the training images is so received

The proposed method uses a target machine learning model ("the target model") and one or two auxiliary machine learning models. The one or two auxiliary machine learning model(s) is/are coupled to the target machine learning model to form a training system framework to train the target model. The two auxiliary machine learning models may be referred to herein as the "code checker" and/or "the scrambler", respectively, as introduced above in Fig 2. One, any two or all three of the models may be arranged as neural networks but other ML techniques are also envisaged herein. The models are functions that can act, directly or indirectly, on the training input image to produce transformed data. The models have parameters that describe how the models act on the training input image. Initially, the models are loaded with initial parameters. The initial parameters can be arbitrarily chosen. The parameters together form a configuration of the training system. A sub-set of parameters for one of the models may be accordingly referred to as the configuration of that model. The configuration is adjusted in one, or preferably a plurality of iterations, to train the training system based on the training input image pairs. Once sufficiently adjusted, the so trained target model can be used of image enhancement, eg, contrast enhancement or artifact reduction/removal.

In the following main reference will be made to contrast enhancement but image artifact reduction is also envisaged in embodiments. Specifically, once sufficiently adjusted, the so trained target model can be used to produce, from a (lower contrast) input image, that was not drawn from the training set, a corresponding image of higher contrast.

We now continue explaining the method steps in more detail:

In an optional step S420, the (low contrast) training image of a given pair is scrambled to obtain a distorted or otherwise corrupted version of the low contrast training image. The scrambling is achieved by applying the low contrast training image to the scrambler model. The scrambling may be achieved by passing the (low contrast) training image through the scrambler model such as when this is a neural network. In this or similar embodiments, the scrambled image should have the same size/dimension as the training image, Alternatively, a scrambling pattern $p$ is generated separately by the scrambler M and this pattern $p$ is then added, by pixel-wise addition, to the low contrast training image.

At step S430, the possibly scrambled input image or, or the original training image as drawn from the training set, either one referred to herein as the "training input image" is applied to the target machine learning model. The target machine learning model processes, in particular transforms, the training input image $I$ and produces a training output image $I'$. During the transformation, and before outputting the training output image $I'$, an intermediate central representation of the training input image is produced in the transformation and the intermediate central representation is then further transformed by the target model into the training output image $I'$. The training output image $I'$ forms an estimate for the target $\tilde{I}$ associated with the training image.

In embodiments, the intermediate central representation CR (also referred to herein as the "code") has a lower size and/or dimensionality than the training input image and the training output image. However, the dimensionality and size of the training input image and of the training output image are the same. Forcing the dimensionality down to obtain the code during the processing of the training input image promotes robustness, a better learning and allows combating over-fitting. Alternatively, the target model is configured to produce an over-complete representation, that is, a code at a larger in size and/or dimensionality than that of the training input and output image. This embodiment may be advantageously combined with sparsity regularization as explained above in Figs 1-3.

The target model may be arranged as a deep neural network, in particular a CNN. In embodiments, the target model has an autoencoder architecture.

At an optional step S440, the so-produced intermediate representation or "code" is then applied to the code checker model to produce, by transformation, an estimate of the original training input image. The estimate may in general differ from the original input image to so define a residue. The residue can be quantified by subtracting the two images and by quantifying this difference using a suitable similarity measure such as the q-norm mentioned above or other. Because the size/and or dimension of the code differs from that of the training input image, the code checker model C should include a facility to re-transform the code back to the same size and dimension as the training input image. In embodiments where the target is an autoencoder network, the code checker may be configured to include the required number of scale changing layers (up-sampler or downsampler) to reverse the dimensional/size change caused by encoder portion of the target model V. The code checker may be arranged itself as an autoencoder. In other words, it may itself include encoder and decoder stages, so may itself produce a "code from the code". However, using a full autoencoder architecture is not necessarily envisaged in all embodiments. It may be sufficient in alternative embodiments, to include, into the code checker only a decoder stage to restore the size and or dimension. The architecture of the scrambler M, if used, may also be chosen as an autoencoder or as any other NN, preferably CNN with multiscale facilities.

At step S450, the configuration is adjusted. This can be done in one or more iterations for a given pair in the context of an optimization scheme to improve an objective function(s), eg minimize a cost function. The adjustment step is biased, to improve the objective function over the iterations. In particular, the configuration is adjusted based on the training output image and the respective outputs of the one or two auxiliary models, the scrambler and the code checker.

More particularly, in step S450, the parameters of the target model are adjusted based on a deviation between the target image and the training output image.

In addition, and in some embodiments, the parameters of the coder checker are adjusted based on the deviation between the estimate as per step and the training input image.

In addition, in some embodiments where the scrambler is used, the parameters of the scrambler M are further adjusted in step S450 based on a deviation between the scrambled image, or a magnitude of the scrambled image, and a magnitude of the residue. The magnitudes, deviations or residue constitute costs and form contributions to the total cost per pair and are captured by the one or more objective functions. The costs can be measured by suitable similarity measure as described above in relation to equations (1a)-(3b).

In other words, in embodiments, three interrelated optimizations are performed, one for each of the three models, the target, scrambler and the code checker.

Specifically, the parameter adjustments are done in one part of the optimization in an attempt to make the target image correspond to the training output image. Also, in a second part of the optimization, the parameter adjusting at step S450 are done so as to reduce the deviation between the estimate and the training input image.

In a third part of the optimization, if the scrambler M is used, the adjustment is done so as to reduce the deviation between the residue and the scrambled image.

The three adjustment operations at step S450 can be done jointly in one or more operations, or can be done in alternate fashion. Specifically, in one iteration cycle only a sub-set of the parameter in the configuration sets are updated whereas the other parameters are kept constant. More specifically, in one iteration only a sub-set relating to one of the models is updated, whilst the parameters in the configuration that relate to the other two models are kept constant. In the next iteration cycle, there is a changeover and now another set of parameters in relation to anther model is updated, whilst the other two sets of parameters are kept constant, and so forth. There may be hence three phases of iteration cycles, one for each model, during one of which phase the respective parameters are changed with respect to any given model, whilst the parameter for that model is kept constant in the other two phases, at the expense of changes in relation to parameters of one or both of the other two models. Again, alternative embodiments are also envisaged where sub-sets of parameters of the configuration for two of the models are changed together whilst the parameters for the other one model are kept constant, and this is done in turn for each model to form the three phases.

Although preferred, it is not necessary to use all three models together as described (the "V+M+C" embodiment). In other embodiments, the target model is only used in combination with the scrambler but not with the code checker, in which case the code checker step S430 can be left out ("V+M" embodiment). In this embodiment, the adjusting step S450 is then based on i) a residue that is formed by a deviation between the training output image (I') and a training target image (I) and ii) a deviation between a magnitude of the residue and a magnitude of the training input image.

Alternatively, and as indicated above, the target model is only used with the code checker in combination, but not with the scrambler ("V+C" embodiment), in which cases scrambling step S420 can be left out. Steps S420 and S430 are hence mutually optional but can also be used in combination. If only two models are used, the target model and one of the auxiliary models, the adjusting proceeds in two phase, adjusting in respect of one model whilst keeping the others parameters constant, and then changing over. Alternatively, all parameters are updated. If either one of steps S430, S420 is left out, the parameter adjuster step is modified accordingly.

As mentioned, the optional step of scrambling the training image may be entirely left or may be used occasionally. That is, the scrambling step may be interleaved at random or at regular intervals. In other words, with this embodiment, the training input image is sometimes drawn directly from the training image without scrambling, or on occasion, at random or in any $k$-th cycle ($k>1$), a scrambled version is produced and input to the target model instead of the unscrambled version.

In step S460 it is checked whether a stopping condition is fulfilled. If not, the adjustment is repeated in one or more iterations in a first, inner loop. Specifically, once the configuration is adjusted in on iteration cycle, the same training image/target image pair is again processed by the two or three models, but this time with the updated parameters, to produce new outputs as described based on which the configuration is readjusted, and so worth. The deviations and residue, also referred to herein as "costs" may be represented as terms in one or more cost functions as per above in eqs (1a)-(3b) The adjustments may be done in the framework of an optimization procedure, such as gradient-based methods that estimate the gradients of the cost function over the parameters. Such gradient-based methods include backpropagation methods for neural networks, as envisaged herein in embodiments.

If the stopping condition is fulfilled for a given pair, process flow continues to step S470 where it is checked whether a new training input image has been received. If no, then the process terminates and the target model V with the current parameters is made available for deployment, if stored or otherwise used. If yes, that is, if a new training input image of a new pair has been received at S410, the method proceeds in a second, outer, loop to now process the newly received training input image as described above.

In in other words, the proposed method proceeds in embodiments in two nested loops, the inner loop to improve the costs for a given pair and the outer loop, over the remaining test image pairs.

It will be understood that the costs incurred by each training image pair is recorded in an overall sum of all costs in the objective function as explained above. In other words, when processing a next training image pair, the cost incurred by some or all previous training image pairs are processed in the earlier cycles is not "forgotten", as the cost contributions of the previous training image pair remains recorded in the overall cost which is the sum of some or all previous costs. The configuration adjustments in step S450 for each pair is done so that the overall sum of some or all costs (including the costs for previous pairs) is minimized.

One, or any two, or all three of the described models may be implemented as neural networks but this is not necessarily so in all embodiments. Other machine learning models may also be used instead.

The adjustment step S450 can be implemented by suitable optimization schemes such as gradient descent, stochastic gradient descent, conjugate gradients and other optimization schemes. In particular, in one embodiment backpropagation is used in particular when one, two or all three models are implemented as neural networks in particular convolutional networks. The target model is preferably implemented as an auto-encoder or variational auto-encoder as required.

Although the above have been described as three separate models, these may be combined into one or more super-models. Some or all method steps in Fig 7 may be performed by a single entity or may be performed in a distributed-computing setting by a plurality of entities.

The system and method may also be used to reduce image artifacts instead of or in addition to contrast enhancements. For artifact reduction applications, the training set may hence include pairs of images, each pair including an image essentially free of artifacts (target image) and an artifact ridden counterpart image (training input image).

As mentioned earlier the proposed system have been observed to yield good results if a deep learning architecture is used for the models V,M, C. The concept of deep learning is applicable not only to neural-networks but to other alternative network type machine learning architectures. In a feed forward artificial neural-network as discussed above, the depth corresponds to the number of hidden layers between the input and output layer. However, in other networks this correspondence may not be necessarily so. A general concept of network depth can be defined in terms of causal paths through the network that links a given final output to an initial input. The path describes all the processing nodes that contributed to the observed output. A length for these paths can be defined by the number of nodes through which the path passes. It can thus be assumed for instance that a recurrent network, may in fact be deeper than a feed forward network with more hidden layers. This is because in the recurrent network the depth is defined by the number of times the path transverses the network structure to produce the output and not only by the number of hidden layers. In other words, the recurring network with fewer hidden layers may be deeper than a feed forward network with more hidden layers. The depth is measured as the maximum causal path length ("PL_max") for instance, or in any other metric in terms of path length.

A depth (as measured in a suitable causal path length such as PL_max) of two has been found to yield good results but other, deeper architectures, such as any one of 3, 4, 5, 6, 7,8, 9 or 10 or more than 10 are also envisaged herein. In some embodiments, the depth is in the tens or in the hundreds, although the depth must be traded off against the responsiveness when deployed and during learning. CNNs with depths of around 10 have been found to yield, for present purposes, accurate results with quick turnaround during deployment, with next to quasi-real-time performance. Depending or the hardware and load, a performance in the order of milliseconds may be achieved during deployment, in particular in forward-propagation through a neural network structure.

The network setup as discussed above at Fig 3 may be seen to be of hybrid character as they include in embodiments portions that are fully connected (such as the reshaper) and CNN portions that are not fully connected, such as in the image processing strand SI. Other such hybrid networks with fully and not-fully connected sub-networks are also envisaged.

The nodes of pure or hybrid networks may be implemented in software as subroutines to implement their activation function. Alternatively, each or some nodes may be formulated in hardware each as a separate computing units.

The network TS may be operated as a distributed computational network, either during deployment or training. The computational burden is shared across a network of interconnected computing units. (Federated) Cloud architecture may be used with benefit in these types of embodiments. This distributed approach may be used with benefit for hybrid networks, with fully connected and CNN-type subnetworks, where the sub-networks are implemented by different computing units (eg, servers) in the Cloud, possibly remote to each other, but communicatively coupled to provide or receive input or output, respectively, from each other. Central processing on a central server is also envisaged in alternative embodiments.

It will be understood that the ML component MLC and/or its training system TS, may be implemented suitably by processing units PU such as GPU or others. GPU's (graphical processing unit) or TPU's (tensor processing units) are optimized to perform tensor or matrix operations (which are series of dot products). It has been found that tensor or matrix operations can be used with benefit for training or deployment. GPUs, TPUs or similar microprocessors are in general optimized for parallel computing, such as in multicore systems.

Suitable circuitry to implement the above described systems SSI in software arranged on a computing device such as a stationary computer, a workstation, for instance a laptop, handheld device, tablet or others.

The proposed deployment and/or training may also be implemented in a client-server based environment. In particular, the training or deployment may be performed by one or more servers in a cloud based architecture.

In addition to software based circuitry the systems for deployment or training as described above may also be implemented as hard coded micro-chips. Specific circuity such as application specific integrated circuitry ASICS Circuitry may be used. A system-on-a-chip (SOC) may include discrete and/or integrated circuitry, and combinations thereof. In an alternative embodiment, the circuity may include suitably configured field-programmable gate array FGPA's. In particular, the described imaging support system SSI may be integrated at least in part into the controller CC of the imaging apparatus or maybe otherwise integrated into the imaging apparatus. The system SSI may be integrated into a workstation or other computer unit associated with the imaging apparatus.

The trained target model V or the training system TS may be held in a central memory MEM or may be held in a distributed fashion in a plurality of servers or memory devices, preferably connectable to an end user computing device (laptops, smart phone, desktop computer, etc.) to request execution of the training and/or deployment of any one of the above described systems V and TS.

Training and deployment may be run om the hardware equipment, or may be run on different computing hardware. Preferably, the hardware for the training is configured for higher performance than for deployment as training may be computational more demanding. Although training may be a one-off operation initially, it may be repeated with new training data. The machine learning components MLC may be switchable into training or deployment mode.

One or more features disclosed herein may be configured or implemented as/with circuitry encoded within a computer-readable medium, and/or combinations thereof. Circuitry may include discrete and/or integrated circuitry, application specific integrated circuitry (ASIC), a system-on-a-chip (SOC), and combinations thereof., a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a model like the World Wide Web and can be downloaded into the working memory of a data processor from such a model. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A system (TS) for training a machine learning model for image processing, comprising:

    an input interface (IN) for receiving at least one training input image (I);
    at least two machine learning models (V, C) having parameters that define a configuration, the at least two machine learning models comprising:

        a target machine learning model (V) to transform the training input image into an intermediate representation (CR) and to produce therefrom a training output image (I');

a first auxiliary machine learning model (C) configured to transform the intermediate representation into an estimate for the training input image;

the system further comprising a model parameter adjuster (PA) configured to adjust the configuration based on i) a residue formed by a deviation between the estimate and the training input image and ii) a deviation between the training output image (I') and a training target image ($\tilde{I}$).

2. System of claim 1, wherein the training input image is drawn from a set TD of training images or wherein the system further comprises a second auxiliary machine learning model (M) configured to scramble a training image from the set of training images to produce the training input image.

3. System of claim 2, wherein the model parameter adjuster (PA) is further configured to adjust the configuration based on a deviation between a magnitude of the residue and a magnitude of the scrambled training image.

4. System of claim 3, wherein the target image ($\tilde{I}$) has a higher contrast than the training input image or includes an artifact of lesser severity than the training input image.

5. System of any one of the previous claims, wherein the target image was acquired with contrast agent present at a region of interest.

6. System of any one of the previous claims, wherein at least one of the target model and the two auxiliary machine learning models is a neural network.

7. System of any one of the previous claims, wherein the training output image has the same size or dimensionality as the training input image, and wherein the intermediate representation has a size or dimensionality different from the training input image.

8. A system (TS) for training a machine learning model for image processing, comprising:

An input interface (IN) or receiving at least one training image ($i$);
at least two machine learning models (V, M) having parameters that define a configuration, the at least two machine learning models comprising:

an auxiliary machine learning model (M) to scramble the training image to produce a training input image (I);
a target machine learning model (V) to transform the training input image into a training output image (I');
the system (TS) further comprising a parameter adjuster (PA) configured to adjust the configuration based on i) a residue that is formed by a deviation between the training output image (I') and a training target image ($\tilde{I}$) and ii) a deviation between a magnitude of the residue and a magnitude of the training input image.

9. A system (SIE) for image enhancement, comprising:

an input interface (IN') to receive an input image (IM);
a machine learning component (MLC) including the target model (V) previously trained by a system (TS) as per any one of the previous claims 1-8, the machine learning component (MLC) to process the input image to produce an output image (IM'), the said output image being an enhanced version of the input image.

10. System of claim 9, wherein the enhancement is any one or more of an artifact reduction and a contrast increase.

11. An imaging arrangement (AR) comprising:

a system as per claim 9 or 10;
an imaging apparatus (IA) supplying an input image to be processed by the system (SIE); and
a display device (DD) for displaying the processed image (IM').

12. Method of training a machine learning model, comprising the steps of:

receiving (S410) at least one training input image (I);
applying (S430) a target machine learning model (V) to transform the training input image into an intermediate representation (RC) and to produce therefrom a training output image (I');

applying (S440) a first auxiliary machine learning model (C) to transform the intermediate representation into an estimate for the training input image;

the target machine learning model (V) and the first auxiliary machine learning model (C) having parameters that define a configuration, the method further comprising:

adjusting (S450) the configuration based on i) a residue formed by a deviation between the estimate and the training input image and ii) a deviation between the training output image (I') and a training target image ($\tilde{I}$).

13. Method of training a machine learning model, comprising the steps of:

receiving (S410) at least one training image (i);

applying (S420) an auxiliary machine learning model (M) to scramble the training image (i) to produce a training input image (I);

applying (S430) a target machine learning model (V) to transform the training input image into a training output image (I');

the at least the target machine learning model and the auxiliary machine learning model having parameters that define a configuration, the method further comprising:

adjusting (S450) the configuration based on i) a residue that is formed by a deviation between the training output image (I') and a training target image ($\tilde{I}$) and ii) a deviation between a magnitude of the residue and a magnitude of the training input image.

14. A computer program element, which, when being executed by at least one processing unit (PU), is adapted to cause the processing unit (PU) to perform the method as per claim 12 or 13.

15. A computer readable medium having stored thereon the program element of claim 14.

**FIG. 1**

**FIG. 2**

FIG. 3

S410

S420

S430

S440

S450

S460

?

S470

?

# FIG. 4

Europäisches
Patentamt

European
Patent Office

Office européen
des brevets

# EUROPEAN SEARCH REPORT

Application Number

EP 19 17 5068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/046068 A1 (CECCALDI PASCAL [US] ET AL) 14 February 2019 (2019-02-14) | 1-4,6-15 | INV.<br>G06N3/04<br>G06N3/08 |
| Y | * abstract *<br>* paragraph [0045] - paragraph [0054] *<br>* paragraph [0072] - paragraph [0087] *<br>* figures 4-7 * | 5 | |
| Y | US 2018/276817 A1 (ISGUM IVANA [NL] ET AL) 27 September 2018 (2018-09-27) | 5 | |
| A | * abstract *<br>* paragraph [0025] * | 1-4,6-15 | |
| A | MOTI FREIMAN ET AL: "Unsupervised Abnormality Detection through Mixed Structure Regularization (MSR) in Deep Sparse Autoencoders", ARXIV.ORG, CORNELL UNIVERSITY LIBRARY, 201 OLIN LIBRARY CORNELL UNIVERSITY ITHACA, NY 14853, 28 February 2019 (2019-02-28), XP081034747, * abstract * | 1-15 | |
| A | EP 3 447 721 A1 (AGFA NV [BE]) 27 February 2019 (2019-02-27) * abstract * * paragraph [0044] - paragraph [0048] * * figures * | 1-15 | |

TECHNICAL FIELDS
SEARCHED (IPC)

G06N
G06T

The present search report has been drawn up for all claims

| Place of search | Date of completion of the search | Examiner |
|---|---|---|
| The Hague | 14 November 2019 | Mandato, Davide |

EPO FORM 1503 03.82 (P04C01)

## ANNEX TO THE EUROPEAN SEARCH REPORT
## ON EUROPEAN PATENT APPLICATION NO.

EP 19 17 5068

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2019

| Patent document cited in search report | Publication date | Patent family member(s) | Publication date |
|---|---|---|---|
| US 2019046068 A1 | 14-02-2019 | NONE | |
| US 2018276817 A1 | 27-09-2018 | US 2018276817 A1<br>US 2019139219 A1<br>US 2019333216 A1<br>WO 2018172990 A1 | 27-09-2018<br>09-05-2019<br>31-10-2019<br>27-09-2018 |
| EP 3447721 A1 | 27-02-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NASH et al.** Hospital-acquired renal insufficiency. *Am. J. Kidney Dis: Off. J. Natl Kidney Found,* 2002, vol. 39, 930-936
- **T. M. MITCHELL.** Machine Learning. McGraw-Hill, 1997
- U-Net: Convoluation Networks for Biomedical Image Segmentation. **OLAF RONNEBERGER et al.** Medical Image Computing and Computer-Assisted Intervention (MICCAI). Springer, LNCS, 2015, vol. 9351, 234-241
- **M D ZEILER et al.** Adaptive Deconvolutional Networks for Mid and High Level Feature Learning. *2011 International Conference on Computer Vision*
- **SERGEY IOFFE et al.** *Batch Normalization: Accelerating Deep Network Training by Reducing Internal Covariate Shift,* 02 March 2015
- **DIEDERIK KINGMA et al.** Adam: A method for stochastic optimization. *Adaptive Moment Estimation,* 2014
- **DAVID E RUMELHART et al.** Learning representations by back-propagating errors. *Nature,* 1986, vol. 323, 533-536